# FASCICULE DE BREVET EUROPEEN

(11) **EP 0 726 172 B1**
(45) Date de publication et mention de la délivrance du brevet: **07.04.1999**
(21) Numéro de dépôt: 96400290.1
(22) Date de dépôt: 13.02.1996
(51) Int. Cl.: B60B 37/10, B65F 1/14

(54) **Dispositif de montage de roue et bac roulant pour la collecte de déchets muni d'un tel dispositif**
Montagevorrichtung für Rad und mit Laufrädern versehener, mit solcher Vorrichtung ausgerüsteter, Müllsammelbehälter
Mounting device for wheel and wheeled container for refuse collecting provided with such a device

(30) Priorité: 13.02.1995 FR 9501620
(43) Date de publication de la demande: 14.08.1996
(73) Titulaire: COMPAGNIE PLASTIC OMNIUM Société Anonyme dite:, 69007 Lyon (FR)
(72) Inventeur: Bourgund, Hervé, 52200 Langres (FR); Rubin, Jacky, 21610 Fontaine Francaise (FR)
(74) Mandataire: Leszczynski, André

(56) Documents cités:
- EP-A- 0 508 902
- DE-U- 9 303 111
- FR-A- 998 070
- GB-A- 221 417
- US-A- 2 323 813
- US-A- 4 444 435

## Description

La présente invention concerne un dispositif de montage de roue et un bac roulant pour la collecte de déchets muni d'un tel dispositif.

On sait que les bacs pour la collecte de déchets ont tendance à faire du bruit lorsqu'on les fait rouler sur une surface irrégulière.

Ceci est dû au fait qu'il existe, entre les pièces de montage des roues des jeux non négligeables qui deviennent d'ailleurs de plus en plus importants à mesure que ces pièces s'usent.

Un dispositif de montage de roue ayant les chractéristiques du préambule de la revendication 1 est décrit dans le document EP-A-0 508 902.

La présente invention vise à fournir un dispositif de montage de roue, notamment pour bac de collecte de déchets, qui résout ce problème de bruit tout en étant particulièrement simple et économique.

La présente invention a pour objet un dispositif de montage de roue sur un arbre porté à chaque extrémité par un palier, la roue comportant un moyeu qui s'étend sur un de ses côtés, dispositif qui est caractérisé par le fait que le palier présente un diamètre supérieur à celui de l'arbre, de sorte qu'il existe un espace annulaire libre entre l'arbre et le palier, et que ledit dispositif comporte une bague élastiquement compressible dans sa direction axiale, engagée autour de l'arbre entre le palier et le moyeu de la roue, ladite bague comportant, du côté du palier, une extrémité chanfreinée apte à occuper ledit espace annulaire, et du côté du moyeu de la roue, une butée apte à prendre appui contre ledit moyeu, des moyens de retenue étant prévus pour immobiliser axialement la roue sur l'arbre en maintenant la bague en compression axiale entre la palier et le moyeu.

On comprend que, grâce au dispositif selon l'invention, il ne subsiste pratiquement aucun jeu radial entre le palier et l'arbre.

On comprend également que les phénomènes d'usure du palier, de l'arbre ou de la bague sont automatiquement compensés par l'élasticité de la bague qui se détend et occupe ainsi la totalité de l'espace annulaire laissé libre entre le palier et l'arbre.

Dans un mode de réalisation préféré de l'invention, la bague comporte, du côté du moyeu de la roue, une seconde extrémité chanfreinée qui est apte à occuper l'espace annulaire éventuellement laissé libre entre le moyeu de la roue et l'arbre.

Ce mode de réalisation permet de rattraper, en cas de besoin, le diamètre d'un moyeu de roue qui serait trop élevé par rapport au diamètre de l'arbre.

Avantageusement les moyens de retenue permettant d'immobiliser axialement la roue sur l'arbre sont constitués par un bonhomme à ressort.

La présente invention a également pour objet un bac muni d'une roue qui est fixée à la cuve du bac à l'aide d'un dispositif de montage tel que décrit ci-dessus.

Dans le but de mieux faire comprendre l'invention, on va en décrire maintenant un mode de réalisation donné à titre d'exemple non limitatif en référence au dessin annexé dans lequel :
- la figure 1 est une vue en élévation d'un bac roulant muni de roues montées à l'aide de dispositifs selon un mode de réalisation de l'invention,
- la figure 2 est une vue en coupe et à plus grande échelle d'un dispositif de montage de roue de la figure 1, et

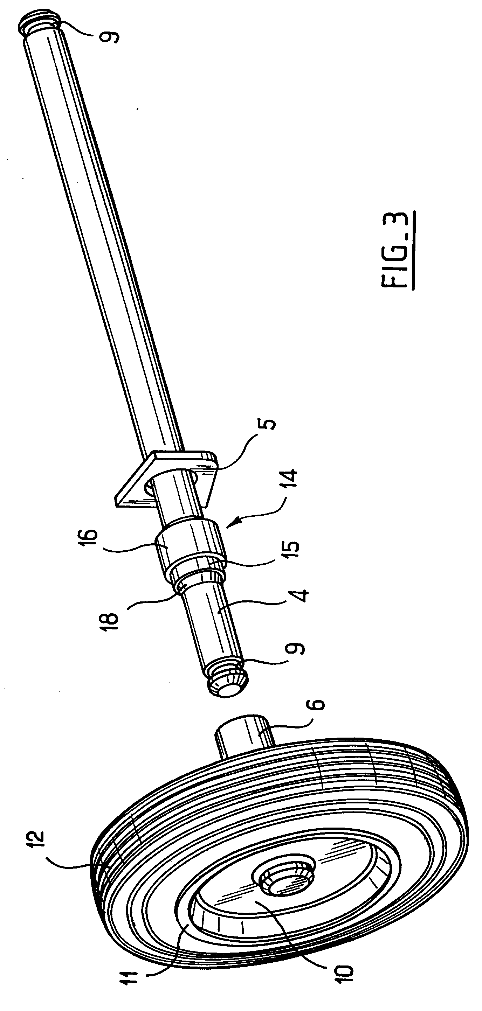

- la figure 3 est une vue éclatée représentant les pièces de la figure 2.

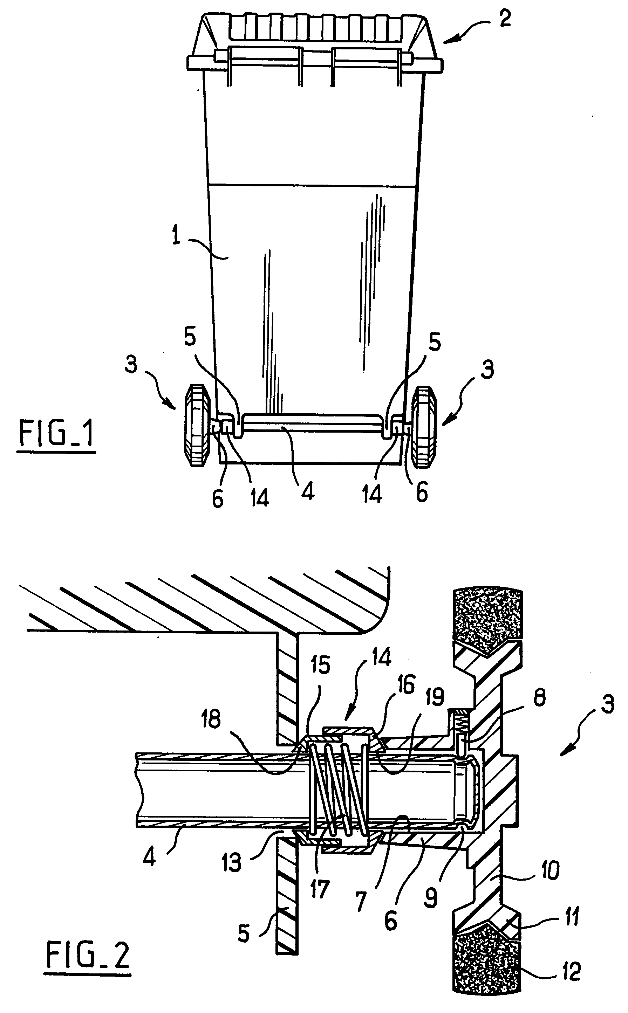

Le bac de la figure 1 comporte une cuve 1 munie d'un couvercle 2 à sa partie supérieure et d'une paire de roues 3 à sa partie inférieure.

Les roues 3 sont montées sur un arbre 4 porté par deux paliers 5 qui sont, dans le cas présent, des nervures réalisées d'un seul tenant avec la cuve 1 lors du moulage de cette dernière.

Chaque roue 3 est du type connu sous le terme de roue à nez, c'est-à-dire qu'elle comporte un moyeu 6 qui s'étend axialement sur un de ses côtés.

Sur la figure 2, on a représenté à plus grande échelle et en coupe la roue droite du bac de la figure 1.

Le moyeu 6 présente une paroi intérieure 7 cylindrique dont le diamètre est légèrement supérieur à celui de l'arbre 4.

Un bonhomme à ressort 8 est logé à l'intérieur du moyeu 6 et pénètre dans une gorge 9 ménagée à cet effet à l'extrémité de l'arbre 4.

Le moyeu 6 est relié par un voile 10 à une jante 11 qui porte une bande de roulement 12.

On voit que le palier 5 de la cuve laisse libre un espace annulaire 13 autour de l'arbre 4.

Conformément à l'invention, une bague 14 élastiquement compressible dans sa direction axiale est logée entre le palier 5 et le moyeu 6 de la roue.

Cette bague 14 est constituée ici par deux boîtiers cylindriques 15 et 16 emboîtés l'un dans l'autre et à l'intérieur desquels est logé un ressort hélicoïdal 17.

Le boîtier 15 situé du côté du palier 5 comporte une extrémité chanfreinée 18.

La paroi intérieure de cette extrémité 18 du boîtier 15 est cylindrique et son diamètre est voisin de celui de l'arbre 4, la paroi extérieure de cette extrémité étant tronconique.

On voit que, sous l'effet du ressort 17, l'extrémité 18 pénètre dans l'espace annulaire 13 et occupe ce dernier en éliminant tout jeu entre l'arbre 4 et le palier 5.

L'extrémité 19 du boîtier 16 situé du côté du moyeu 6 présente une forme symétrique à celle de l'extrémité opposée 18.

On comprend que l'action du ressort 17 tend à écarter l'un de l'autre les deux boîtiers 15 et 16, ce qui provoque l'engagement des extrémités 18 et 19 dans les espaces annulaires laissés libres entre, d'une part le palier 5 et l'arbre 4, et d'autre part le moyeu 6 et l'arbre 4.

Chaque extrémité 18, 19 prend ainsi appui sur le palier 5 et respectivement sur le moyeu 6.

En outre, si les extrémités 18, 19 des boîtiers 15, 16 présentent une légère élasticité radiale, ce qui peut être obtenu par exemple en ménageant des fentes longitudinales dans lesdits boîtiers au voisinage de leurs extrémités, lesdites extrémités 18 et 19 ajustent automatiquement leur diamètre à celui de l'arbre, ce qui évite également un risque de vibrations entre la bague et l'arbre.

Dans une variante non représentée, le moyeu de la roue présente un diamètre voisin de celui de l'arbre, de sorte qu'il n'existe pratiquement aucun jeu entre le moyeu et l'arbre, si ce n'est un jeu nécessaire à la rotation du moyeu. Dans un tel cas, le boîtier 5 comporte à son extrémité 19, une simple butée perpendiculaire à l'arbre, destinée à prendre appui contre le bord correspondant du moyeu 6.

Il est bien entendu que le mode de réalisation qui vient d'être décrit ne présente aucun caractère limitatif et qu'il pourra recevoir toute modification désirable sans sortir pour cela du cadre de l'invention, comme défini par les revendications.

En particulier, bien que la bague élastiquement compressible décrite ici soit constituée par deux boîtiers et un ressort hélicoïdal, une telle bague pourrait être réalisée en une seule pièce, par exemple en caoutchouc ou en une pièce en matière plastique comportant un soufflet dans sa partie centrale de manière à lui conférer une élasticité axiale suffisante.

## Revendications

1. Dispositif de montage d'une roue sur un arbre porté par un palier, la roue comportant un moyeu qui s'étend sur un de ses côtés, caractérisé par le fait que le palier (5) présente un diamètre supérieur à celui de l'arbre (4), de sorte qu'il existe un espace annulaire libre (13) entre l'arbre (4) et le palier (5), et que ledit dispositif comporte une bague (14) élastiquement compressible dans sa direction axiale, engagée autour de l'arbre (4) entre le palier (5) et le moyeu (6) de la roue (3), ladite bague (14) comportant, du côté du palier (6), une extrémité (18) chanfreinée apte à occuper ledit espace annulaire (13), et du côté du moyeu (6) de la roue (3), une butée (19) apte à prendre appui contre ledit moyeu (6), des moyens de retenue (8,9) étant prévus pour immobiliser axialement la roue (3) sur l'arbre (4) en maintenant la bague (14) en compression axiale entre le palier (5) et le moyeu (6).

2. Dispositif selon la revendication 1, caractérisé par le fait que la bague (14) est constituée par deux boîtiers (15, 16) emboîtés l'un dans l'autre et renfermant un ressort hélicoïdal (17).

3. Dispositif selon la revendication 1, caractérisé par le fait que la bague (14) comporte, du côté du moyeu (6) de la roue (3), une extrémité chanfreinée (19) apte à pénétrer dans un espace annulaire éventuellement laissé libre entre le moyeu (6) et l'arbre (4).

4. Bac roulant pour la collecte de déchets, caractérisé par le fait qu'il comporte un dispositif de montage de roue selon l'une quelconque des revendications 1 à 3.

## Claims

1. Means for mounting a wheel on a shaft supported by a bearing, the wheel comprising a hub extending from one side, characterized in that the bearing (5) is of a greater diameter than the shaft (4), so that a free annular space (13) exists between the shaft (4) and the bearing (5), and in that the said means comprises a ring (14) that is elastically compressible in its axial direction and is engaged about the shaft (4) between the bearing (5) and the hub (6) of the wheel (3), the said ring (14) comprising, on the side adjacent to the bearing (5), a bevelled end (18) able to occupy the said annular space (13), and, on the side adjacent to the hub (6) of the wheel (3), a shoulder (19) able to bear against the said hub (6), while retention means (8, 9) are provided to immobilize the wheel (3) axially on the shaft (4) while keeping the ring (14) compressed axially between the bearing (5) and the hub (6).

2. Means according to Claim 1, characterized in that the ring (14) consists of two housings (15, 16) engaged one inside the other and enclosing a helical spring (17).

3. Means according to Claim 1, characterized in that the ring (14) comprises, on the side adjacent to the hub (6) of the wheel (3), a bevelled end (19) able to fit into an annular space which may possibly be left free between the hub (6) and the shaft (4).

4. Wheeled bin for the collection of rubbish, characterized in that it comprises a wheel mounting means according to any one of Claims 1 to 3.

## Patentansprüche

1. Vorrichtung zur Montage eines Rades auf einer durch ein Lager gehaltenen Achse, wobei das Rad eine Nabe aufweist, die sich auf einer seiner Seiten erstreckt, dadurch gekennzeichnet, daß das Lager (5) einen größeren Durchmesser als die Achse (4) aufweist, so daß zwischen der Achse (4) und dem Lager (5) ein ringförmiger Freiraum (13) besteht, und die genannte Vorrichtung einen in seiner Axialrichtung elastisch komprimierbaren Ring (14) aufweist, der, die Achse (4) umgebend, zwischen dem Lager (5) und der Nabe (6) des Rades (3) eingesetzt ist und auf der Seite des Lagers (6) ein abgefastes Ende (18), das in den genannten ringförmigen Freiraum (13) eintreten kann, und auf der Seite der Nabe (6) des Rades (3) einen Anschlag (19) aufweist, der sich an die Nabe (6) anlegen kann, wobei Haltemittel (8, 9) dazu vorgesehen sind, das Rad (8) axial auf der Achse (4) zu befestigen und den Ring (14) unter axialer Kompression zwischen dem Lager (5) und der Nabe (6) zu halten.

2. Vorrichtung nach Anspruch 1, dadurch gekennzeichnet, daß der Ring (14) durch zwei ineinandergreifende Halbschalen (15, 16) gebildet wird, die eine Schraubenfeder (17) umschließen.

3. Vorrichtung nach Anspruch 1, dadurch gekennzeichnet, daß der Ring (14) auf der Seite der Nabe (6) des Rades (3) ein abgefastes Ende (19) aufweist, daß das dazu ausgebildet ist, in einen gegebenenfalls zwischen der Nabe (6) und der Achse (4) bestehenden Ringraum einzutreten.

4. Müllsammelbehälter mit Rädern, dadurch gekennzeichnet, daß er eine Rad-Montagevorrichtung nach einem der Ansprüche 1 bis 3 aufweist.
